# EUROPEAN PATENT SPECIFICATION

(11) **EP 2 955 088 B1**
(45) Date of publication and mention of the grant of the patent: **16.11.2016**
(21) Application number: 15152772.8
(22) Date of filing: 28.01.2015
(51) Int. Cl.: B62J 15/00, B62J 35/00, B62K 11/04, B62K 19/46

(54) **STRADDLE-TYPE VEHICLE**
GRÄTSCHSITZFAHRZEUG
VÉHICULE DE TYPE À ENFOURCHER

(30) Priority: 27.05.2014 JP 2014108810
(43) Date of publication of application: 16.12.2015
(73) Proprietor: Yamaha Hatsudoki Kabushiki Kaisha, Iwata-shi, Shizuoka 438-8501 (JP)
(72) Inventor: Yagi, Kyohei, Iwata-shi, Shizuoka 438-8501 (JP); Tsuji, Masayuki, Iwata-shi, Shizuoka 438-8501 (JP); Kageyama, Kouji, Iwata-shi, Shizuoka 438-8501 (JP)
(74) Representative: Grünecker Patent- und Rechtsanwälte PartG mbB

(56) References cited:
- EP-A1- 2 287 459
- FR-A1- 2 709 455
- FR-A1- 2 712 432
- JP-A- 2002 211 468
- US-A1- 2006 066 092

## Description

The present invention relates to a straddle-type vehicle according to the preamble of independent claim 1. Such a straddle-type vehicle can be taken from the prior art document US 2006/0066092 A1.

"Underbone" straddle-type vehicles are conventionally known. An underbone straddle-type vehicle includes: a head pipe; a body frame including a main frame that extends obliquely downward and rearward from the head pipe; and an engine disposed below the body frame. In such an underbone straddle-type vehicle, a space is provided in front of a seat, so that a portion of the vehicle located between the seat and a handlebar is reduced in height.

For example, JP 2006-88892 A or US 2006/0066092 A1 discloses an underbone straddle-type vehicle that includes: a seat on which a rider sits; an air cleaner disposed below the seat; a battery disposed between the seat and the air cleaner; and a fuel tank disposed behind the battery.

When an attempt is made to install a larger engine in an underbone straddle-type vehicle, an air cleaner that supplies air to the engine must have a larger volume. If an air cleaner having a larger volume is to be installed on the straddle-type vehicle disclosed in JP 2006-88892 A, the battery has to be disposed at a higher position because the battery is disposed upwardly of the air cleaner, and therefore, the seat must be located at a higher position. As a result, it might be difficult for a rider to place a foot on the ground. Since the fuel tank is disposed behind the battery, the fuel tank might be reduced in volume if the battery is disposed rearward in accordance with an increase in volume of the air cleaner.

It is conceivable that a battery may be disposed behind a fuel tank in order to ensure a volume of an air cleaner and a volume of the fuel tank. Since a rear fender is disposed behind the fuel tank and above a rear wheel, a sufficient space has to be provided between the rear wheel and the rear fender so that the rear wheel and the rear fender do not come into contact with each other when the rear wheel bounces upward. Therefore, the battery cannot be disposed at a low position, which means that a space behind the fuel tank is limited. One conceivable solution to this problem is to dispose the battery on the rear fender. Unfortunately, if the battery disposed on the rear fender has a large dimension in an up-down direction, a seat disposed above the battery is located at a high position. Hence, it is conceivable that the battery may be disposed in a recumbent position so as to reduce the dimension of the battery in the up-down direction. However, when the battery is disposed in a recumbent position, a contact area between the battery and the rear fender increases, and thus stress produced in the rear fender due to oscillations during vehicle traveling is likely to be applied to the battery.

It is an object of the present invention to provide a straddle-type vehicle that ensures a volume of an air cleaner and a volume of a fuel tank without making it difficult for a rider to place a foot on the ground.

According to the present invention said object is solved by a straddle-type vehicle having the features of independent claim 1. Preferred embodiments are laid down in the dependent claims.

A straddle-type vehicle according to a preferred embodiment includes: a head pipe; a main frame extending obliquely downward and rearward from the head pipe; a left seat frame extending rearward from the main frame; a right seat frame extending rearward from the main frame, the right seat frame being disposed rightward of the left seat frame; a seat disposed above the right and left seat frames; a body cover disposed at least laterally of the right and left seat frames, the body cover including an upper surface portion located behind the head pipe and in front of the seat and extending obliquely downward and rearward to a position lower than the seat; a fuel tank disposed under the seat; an air cleaner disposed under the seat and in front of the fuel tank, the air cleaner including an upper end located higher than a lower end of the fuel tank; a rear wheel disposed below the right and left seat frames; a rear fender disposed under the right and left seat frames and over a portion of the rear wheel, the rear fender including a first upper surface, a second upper surface protruding upward from the first upper surface, a first lower surface located on a back of the first upper surface, and a second lower surface recessed upward from the first lower surface and located on a back of the second upper surface; and a battery disposed behind the fuel tank and on or over the second upper surface. When the rear wheel bounces upward, the second lower surface and the rear wheel do not come into contact with each other. A largest surface of the battery faces the second upper surface, a longest side of the battery in a plan view extends in a width direction of the vehicle, and a shortest side of the battery extends in an up-down direction. A front end of an upper surface of the battery is located lower than a rear end of the upper surface of the battery.

In the straddle-type vehicle according to the preferred embodiment, the second upper surface of the rear fender protrudes upward from the first upper surface. Therefore, rigidity of the rear fender is higher than when the first and second upper surfaces are provided in the same plane. As a result, deflection of the second upper surface is unlikely to occur even when oscillations are produced during vehicle traveling. The battery is disposed on or over the second upper surface of the rear fender, and therefore, stress applied to the battery is smaller than when the battery is disposed on or over the first upper surface. The second lower surface of the rear fender is recessed upward from the first lower surface. Hence, a sufficient space is provided between the rear wheel and the rear fender. As a result, when the rear wheel bounces upward, the rear wheel and the rear fender do not come into contact with each other. The battery is disposed on or over the second upper surface of the rear fender at an angle so that the largest surface of the battery faces the second upper surface of the rear fender, the longest side of the battery extends in the width direction of the vehicle, and the shortest side of the battery extends in the up-down direction. Thus, a dimension of the battery in the up-down direction is small. As a result, the seat is prevented from being raised in position due to the placement of the battery. Since the longest side of the battery extends in the width direction of the vehicle, a space provided behind the battery is larger than when the longest side of the battery extends in a front-rear direction of the vehicle. The battery is disposed behind the fuel tank, thus making it possible to increase the air cleaner in size in an upward direction and/or increase the fuel tank in size in a forward direction.

According to another preferred embodiment, the second upper surface is preferably provided with a plurality of ribs. The battery is preferably disposed on the plurality of ribs, and the largest surface of the battery preferably faces the ribs.

According to the above-described preferred embodiment, rigidity of the second upper surface of the rear fender is further increased, and stress applied to the battery is further reduced. Besides, the battery is supported with more stability.

According to still another preferred embodiment, the upper end of the air cleaner is preferably located higher than a vertical center position of the fuel tank.

According to the above-described preferred embodiment, the use of the air cleaner having a larger volume is enabled.

According to yet another preferred embodiment, the seat preferably includes: a first seat portion on which a driver sits; and a second seat portion on which a pillion passenger sits, the second seat portion being located behind the first seat portion. The battery is preferably disposed under the second seat portion.

According to the above-described preferred embodiment, the battery is disposed on or over the second upper surface of the rear fender so that the dimension of the battery in the up-down direction is small, and therefore, the second seat portion is kept at a low position. As a result, comfort of the pillion passenger during riding is improved.

According to still yet another preferred embodiment, the left seat frame preferably includes a left seat load receiving portion that receives a load from the seat. The right seat frame preferably includes a right seat load receiving portion that receives a load from the seat. The right and left seat load receiving portions are each preferably disposed between the right and left seat frames. The battery is preferably disposed between the right and left seat load receiving portions.

According to the above-described preferred embodiment, a space provided between the right and left seat load receiving portions is effectively utilized, thus compactly disposing the battery on or over the second upper surface of the rear fender.

According to another preferred embodiment, the straddle-type vehicle preferably further includes a reinforcing member. The reinforcing member preferably includes: a bottom wall disposed on or over the second upper surface; a left wall extending upward from the bottom wall; a right wall extending upward from the bottom wall; a left support portion extending leftward from the left wall and supported by the left seat load receiving portion; and a right support portion extending rightward from the right wall and supported by the right seat load receiving portion. The battery is preferably disposed on the bottom wall.

According to the above-described preferred embodiment, the bottom wall of the reinforcing member is disposed on or over the second upper surface of the rear fender, and the right and left support portions of the reinforcing member are supported by the right and left seat load receiving portions, respectively. Hence, even when deflection of the second upper surface of the rear fender toward the bottom wall of the reinforcing member is caused to occur, the bottom wall inhibits the deflection of the second upper surface. The battery is disposed on the bottom wall, thus further reducing stress applied to the battery.

According to still another preferred embodiment, the straddle-type vehicle preferably further includes electrical equipment disposed behind at least one of the right and left seat load receiving portions and laterally of the battery.

According to the above-described preferred embodiment, a space provided behind the right seat load receiving portion and/or the left seat load receiving portion and laterally of the battery is effectively utilized, thus compactly disposing the electrical equipment.

According to yet another preferred embodiment, the straddle-type vehicle preferably further includes a storage box disposed behind the fuel tank. The storage box preferably includes a storage portion provided behind the battery.

According to the above-described preferred embodiment, the battery is disposed on or over the second upper surface of the rear fender so that the longest side of the battery extends in the width direction of the vehicle, thus providing, behind the battery, the storage portion whose storage space is larger than when the longest side of the battery extends in the front-rear direction of the vehicle.

According to still yet another preferred embodiment, the storage box preferably includes a cover portion disposed over the battery.

According to the above-described preferred embodiment, the cover portion protects the battery from water and/or dust, for example, which might penetrate through an interstice of the seat.

According to another preferred embodiment, the battery preferably overlaps with the right and left seat frames in a side view of the vehicle.

According to the above-described preferred embodiment, the battery is disposed at a low position. As a result, the seat located above the battery is prevented from being raised in position.

According to still another preferred embodiment, the straddle-type vehicle preferably further includes: a left down frame extending obliquely downward and rearward from the left seat frame; a right down frame extending obliquely downward and rearward from the right seat frame, the right down frame being disposed rightward of the left down frame; a left backstay disposed rearward relative to the left down frame, the left backstay connecting the left down frame and the left seat frame to each other; and a right backstay disposed rearward relative to the right down frame, the right backstay connecting the right down frame and the right seat frame to each other. A portion of the rear fender is preferably disposed under the right and left backstays. In a side view of the vehicle, at least a portion of a left connection between the left backstay and the left seat frame is located forward relative to the battery, and at least a portion of a right connection between the right backstay and the right seat frame is located forward relative to the battery.

According to the above-described preferred embodiment, a space between the rear fender and the rear wheel is larger than when the right and left connections are each disposed rearward relative to the battery. As a result, even when the rear wheel is relatively large, interference between the rear fender and the rear wheel is prevented.

According to yet another preferred embodiment, the battery is preferably fixed to the second upper surface by a rubber band extending in a direction that intersects the longest side of the battery.

According to the above-described preferred embodiment, the battery is fixed to the second upper surface of the rear fender with more stability.

### ADVANTAGEOUS EFFECTS OF INVENTION

Various preferred embodiments of the present teaching provide an underbone straddle-type vehicle that ensures a volume of an air cleaner and a volume of a fuel tank without making it difficult for a rider to place a foot on the ground.

### BRIEF DESCRIPTION OF DRAWINGS

FIG. 1 is a left side view of a straddle-type vehicle according to a first preferred embodiment.
FIG. 2 is a left side view illustrating a body frame according to the first preferred embodiment and some of its surrounding components.
FIG. 3 is a side view illustrating a seat according to the first preferred embodiment and its surrounding components.
FIG. 4 is a plan view illustrating components of the straddle-type vehicle according to the first preferred embodiment which are located in a rear portion of the vehicle.
FIG. 5 is a plan view illustrating components of the straddle-type vehicle according to the first preferred embodiment which are located in the rear portion of the vehicle.
FIG. 6 is a perspective view illustrating a second upper surface of a rear fender according to the first preferred embodiment and its surrounding components.
FIG. 7 is a perspective view illustrating a battery according to the first preferred embodiment and its surrounding components.
FIG. 8 is a cross-sectional view taken along the line VIII-VIII in FIG. 4.
FIG. 9 is a perspective view illustrating a second lower surface of the rear fender according to the first preferred embodiment and its surrounding components.

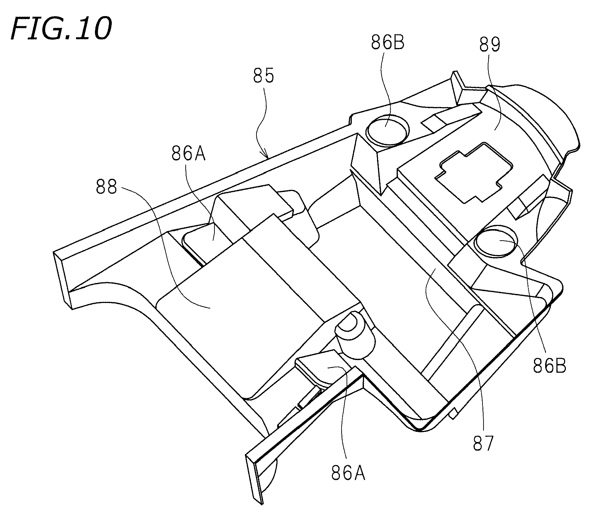

FIG. 10 is a perspective view illustrating a structure of a storage box according to the first preferred embodiment.
FIG. 11 is a perspective view illustrating a second upper surface of a rear fender according to a second preferred embodiment and its surrounding components.
FIG. 12 is a perspective view illustrating a battery according to the second preferred embodiment and its surrounding components.
FIG. 13 is a perspective view illustrating a reinforcing member according to the second preferred embodiment.

### DESCRIPTION OF EMBODIMENTS

### First Preferred Embodiment

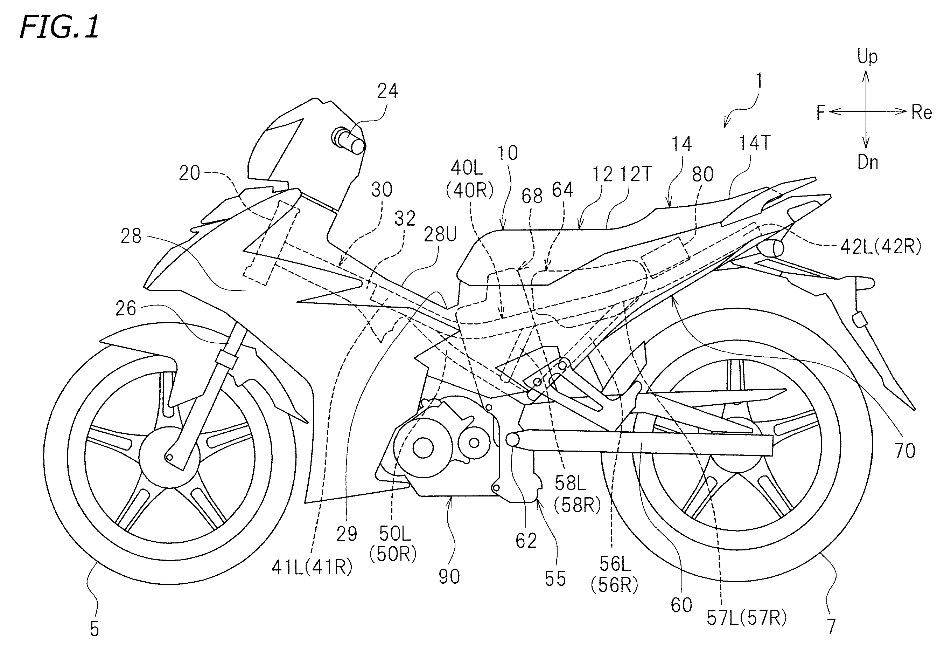

Hereinafter, preferred embodiments will be described. As illustrated in FIG. 1, a straddle-type vehicle according to the present preferred embodiment is an "underbone type" motorcycle 1. As used herein, the term "straddle-type vehicle" refers to a vehicle that a rider straddles when getting on the vehicle.

In the following description, unless otherwise noted, the terms "front", "rear", "right", "left", "up" and "down" refer to front, rear, right, left, up and down with respect to a rider sitting on a seat 10 of the motorcycle 1, respectively. The terms "up" and "down" refer to a vertically upward direction and a vertically downward direction when the motorcycle 1 is brought to a stop on a horizontal plane, respectively. Reference signs "F", "Re", "R", "L", "Up" and "Dn" in the drawings represent front, rear, right, left, up and down, respectively.

As illustrated in FIG. 1, the motorcycle 1 preferably includes: a head pipe 20; a body frame 30 connected to the head pipe 20; the seat 10 on which a rider sits; an engine 90 that is an internal combustion engine; an air cleaner 68; a fuel tank 64; and a battery 80. The head pipe 20 supports a steering shaft (not illustrated). An upper portion of the steering shaft is provided with a handlebar 24. A lower portion of the steering shaft is provided with a front fork 26. A front wheel 5 is rotatably supported by a lower end portion of the front fork 26.

As illustrated in FIG. 1, the body frame 30 preferably includes a main frame 32, a right seat frame 40R, a left seat frame 40L, a right down frame 50R, a left down frame 50L, a right backstay 56R, a left backstay 56L, a right reinforcing frame 58R, and a left reinforcing frame 58L.

As illustrated in FIG. 1, the motorcycle 1 preferably further includes a body cover 28. The body cover 28 is preferably disposed at least laterally of the right and left seat frames 40R and 40L. In the present preferred embodiment, the body cover 28 is disposed laterally of the head pipe 20. The body cover 28 is disposed laterally of the main frame 32. The body cover 28 is disposed laterally of the right and left seat frames 40R and 40L. The body cover 28 preferably includes an upper surface portion 28U located behind the head pipe 20 and in front of the seat 10. The upper surface portion 28U extends obliquely downward and rearward to a position lower than the seat 10. The body cover 28 preferably further includes a recessed portion 29 recessed downward in a side view of the vehicle. The recessed portion 29 is provided behind the head pipe 20. The recessed portion 29 is provided in front of the seat 10. The recessed portion 29 is provided lower than the seat 10. The recessed portion 29 is provided above the engine 90. The body cover 28 includes the recessed portion 29, thus providing a space between the head pipe 20 and the seat 10.

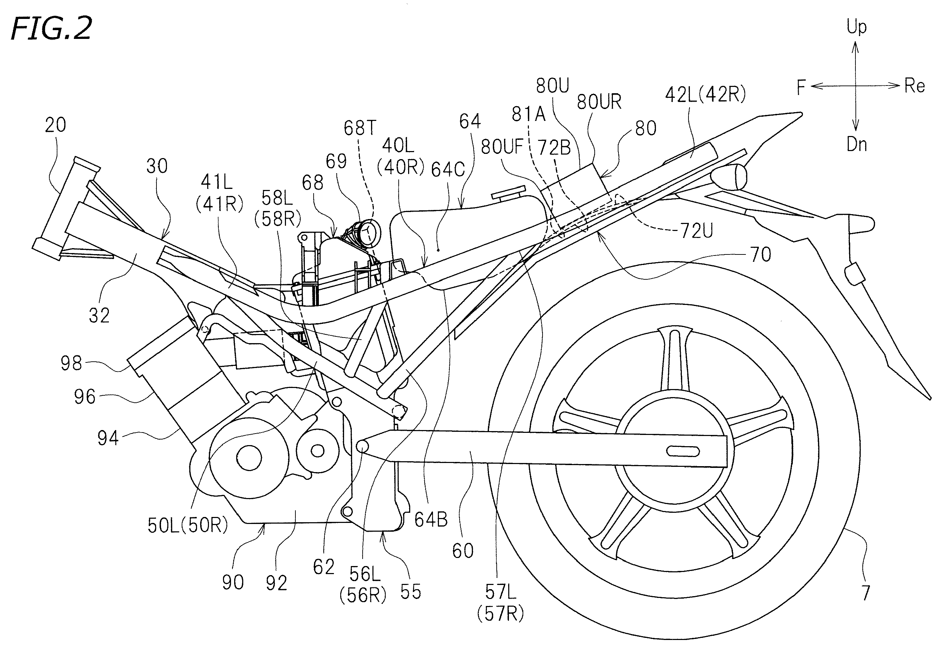

As illustrated in FIG. 2, the engine 90 preferably includes a crankcase 92, a cylinder body 94, a cylinder head 96, and a cylinder head cover 98. The cylinder body 94 extends upward from a front portion of the crankcase 92. The cylinder head 96 is disposed on the cylinder body 94 and connected to the cylinder body 94. The cylinder head cover 98 is disposed on the cylinder head 96 and connected to the cylinder head 96. The engine 90 is disposed below the main frame 32. The engine 90 is supported by the main frame 32. The engine 90 is also supported by an engine bracket 55 provided on the right and left down frames 50R and 50L.

As illustrated in FIG. 2, the main frame 32 is connected to the head pipe 20. The main frame 32 extends obliquely downward and rearward from the head pipe 20.

As illustrated in FIG. 2, the left seat frame 40L is connected to the main frame 32. The left seat frame 40L extends rearward from the main frame 32. The left seat frame 40L preferably includes a first left portion 41 L and a second left portion 42L. The first and second left portions 41L and 42L are integral with each other. The first left portion 41 L extends obliquely downward and rearward from the main frame 32. The second left portion 42L extends obliquely upward and rearward from the first left portion 41 L.

As illustrated in FIG. 2, the right seat frame 40R is connected to the main frame 32. The right seat frame 40R extends rearward from the main frame 32. The right seat frame 40R is disposed rightward of the left seat frame 40L. The right seat frame 40R preferably includes a first right portion 41 R and a second right portion 42R. The first and second right portions 41R and 42R are integral with each other. The first right portion 41 R extends obliquely downward and rearward from the main frame 32. The second right portion 42R extends obliquely upward and rearward from the first right portion 41 R.

As illustrated in FIG. 2, the left down frame 50L extends obliquely downward and rearward from the left seat frame 40L. The left down frame 50L is connected to the first left portion 41 L of the left seat frame 40L. The left down frame 50L extends obliquely downward and rearward from the first left portion 41 L of the left seat frame 40L.

As illustrated in FIG. 2, the right down frame 50R extends obliquely downward and rearward from the right seat frame 40R. The right down frame 50R is located rightward of the left down frame 50L. The right down frame 50R is connected to the first right portion 41 R of the right seat frame 40R. The right down frame 50R extends obliquely downward and rearward from the first right portion 41 R of the right seat frame 40R.

As illustrated in FIG. 2, the motorcycle 1 preferably includes a rear arm 60 connected to the engine bracket 55. The engine bracket 55 and the rear arm 60 are connected to each other via a pivot shaft 62. The rear arm 60 is connected to the engine bracket 55 so as to be swingable. Alternatively, the rear arm 60 may be connected to the body frame 30 or the engine 90 so as to be swingable.

As illustrated in FIG. 2, the motorcycle 1 preferably includes a rear wheel 7. The rear wheel 7 is rotatably supported by a rear end portion of the rear arm 60. The rear wheel 7 is disposed below the right and left seat frames 40R and 40L.

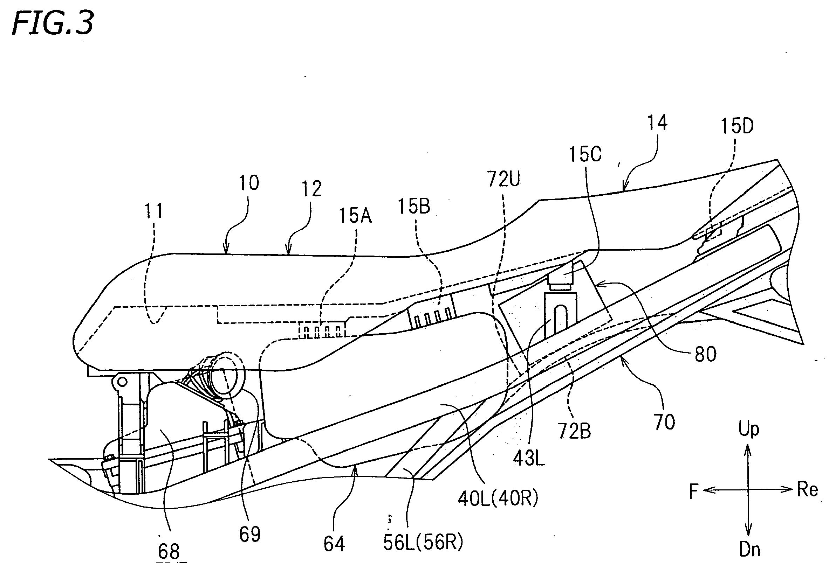

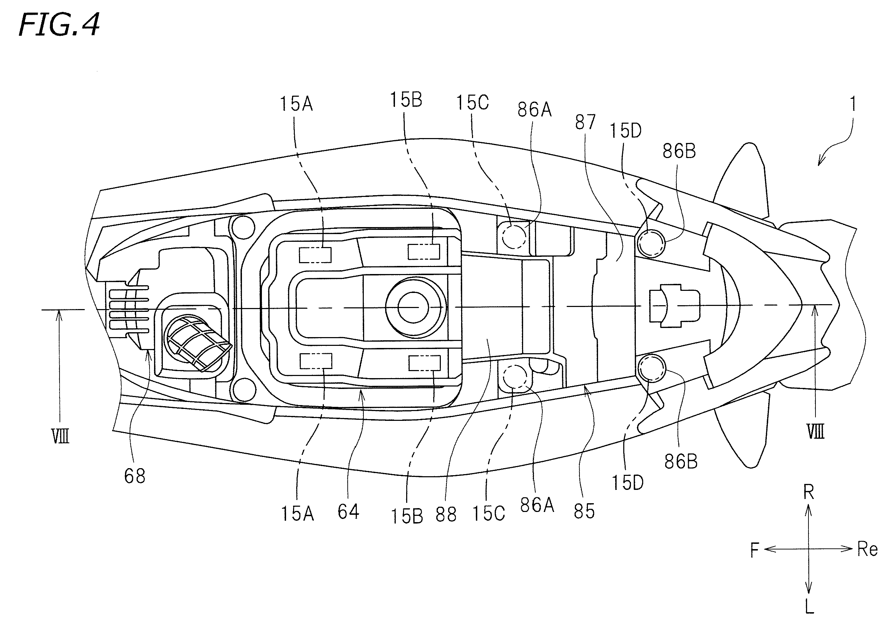

FIG. 3 is a side view illustrating the seat 10 and its surrounding components. Note that a storage box 85 is not illustrated in FIG. 3 for the sake of convenience of description. As illustrated in FIG. 3, the seat 10 is disposed above the right and left seat frames 40R and 40L. The seat 10 is supported by the right and left seat frames 40R and 40L. The seat 10 preferably includes: a first seat portion 12 on which a driver sits; and a second seat portion 14 on which a pillion passenger sits. The second seat portion 14 is located behind the first seat portion 12. An upper surface 12T of the first seat portion 12 is located lower than an upper surface 14T of the second seat portion 14. As illustrated in FIG. 3, the seat 10 preferably includes first, second, third and fourth feet 15A, 15B, 15C and 15D to be retained. The first, second, third and fourth feet 15A, 15B, 15C and 15D to be retained are provided on an undersurface 11 of the seat 10. As illustrated in FIG. 4, the first and second feet 15A and 15B to be retained are supported by the fuel tank 64. The third feet 15C to be retained are retained by first retaining portions 86A of the storage box 85 (which will be described below). The fourth feet 15D to be retained are retained by second retaining portions 86B of the storage box 85 (which will be described below).

As illustrated in FIG. 1, the fuel tank 64 is disposed behind the air cleaner 68. The fuel tank 64 is disposed under the seat 10.

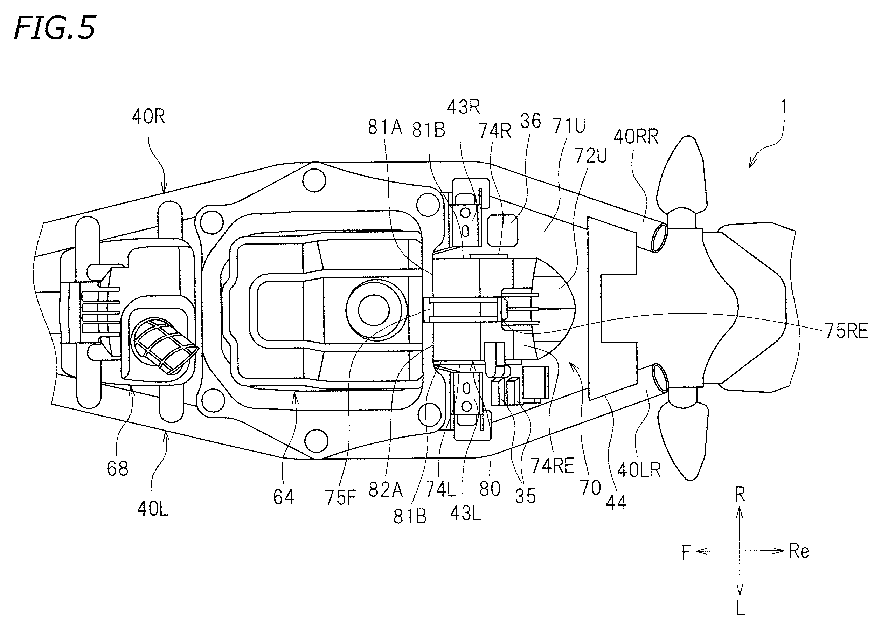

As illustrated in FIG. 1, the motorcycle 1 preferably includes the air cleaner 68. The air cleaner 68 is disposed under the seat 10. More specifically, the air cleaner 68 is disposed under the first seat portion 12. The air cleaner 68 is disposed in front of the fuel tank 64. The air cleaner 68 is disposed behind the main frame 32. As illustrated in FIG. 5, the air cleaner 68 is disposed between the right and left seat frames 40R and 40L. As illustrated in FIG. 2, the air cleaner 68 is disposed rearward relative to at least a portion of the engine 90. The air cleaner 68 is disposed rearward relative to the cylinder body 94. As illustrated in FIG. 2, the air cleaner 68 is provided with a suction pipe 69. The suction pipe 69 extends upward. The suction pipe 69 is opened obliquely leftward and rearward.

As illustrated in FIG. 2, an upper end 68T of the air cleaner 68 is located higher than a lower end 64B of the fuel tank 64. The upper end 68T of the air cleaner 68 is located higher than a vertical center position 64C of the fuel tank 64.

As illustrated in FIG. 2, the left backstay 56L is disposed rearward relative to the left down frame 50L. The left backstay 56L extends obliquely upward and rearward from the left down frame 50L. The left backstay 56L connects the left down frame 50L and the second left portion 42L of the left seat frame 40L to each other. In the side view of the vehicle, a left connection 57L between the left backstay 56L and the second left portion 42L of the left seat frame 40L overlaps with the fuel tank 64. In the side view of the vehicle, at least a portion of the left connection 57L is preferably located forward relative to the battery 80. In the present preferred embodiment, the left connection 57L is located forward relative to the battery 80.

As illustrated in FIG. 2, the right backstay 56R is disposed rearward relative to the right down frame 50R. The right backstay 56R extends obliquely upward and rearward from the right down frame 50R. The right backstay 56R is located rightward of the left backstay 56L. The right backstay 56R connects the right down frame 50R and the second right portion 42R of the right seat frame 40R to each other. In the side view of the vehicle, a right connection 57R between the right backstay 56R and the second right portion 42R of the right seat frame 40R overlaps with the fuel tank 64. In the side view of the vehicle, at least a portion of the right connection 57R is preferably located forward relative to the battery 80. In the present preferred embodiment, the right connection 57R is located forward relative to the battery 80.

As illustrated in FIG. 1, the motorcycle 1 preferably includes a rear fender 70. The rear fender 70 is disposed under the right and left seat frames 40R and 40L. More specifically, the rear fender 70 is disposed under the second left portion 42L of the left seat frame 40L and the second right portion 42R of the right seat frame 40R. As illustrated in FIG. 2, a portion of the rear fender 70 is disposed under the right and left backstays 56R and 56L. The rear fender 70 is disposed over a portion of the rear wheel 7.

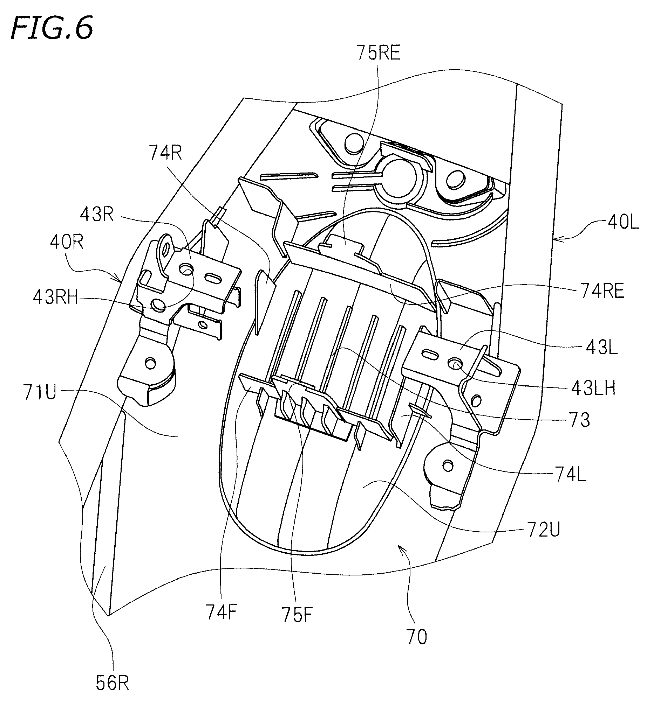

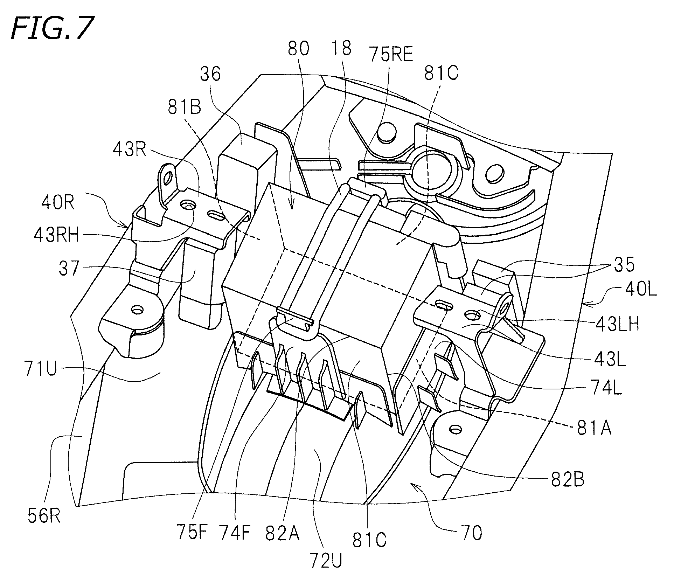

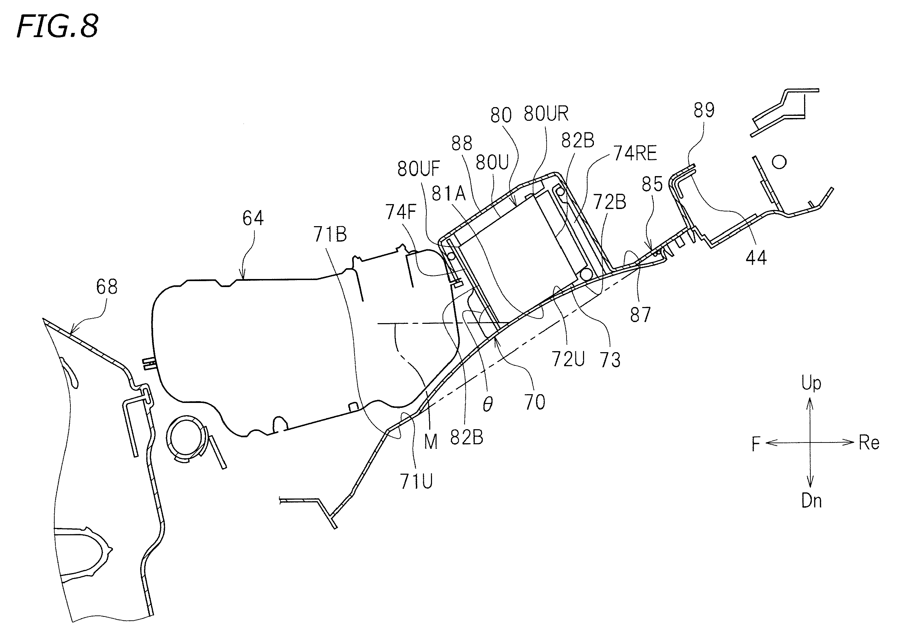

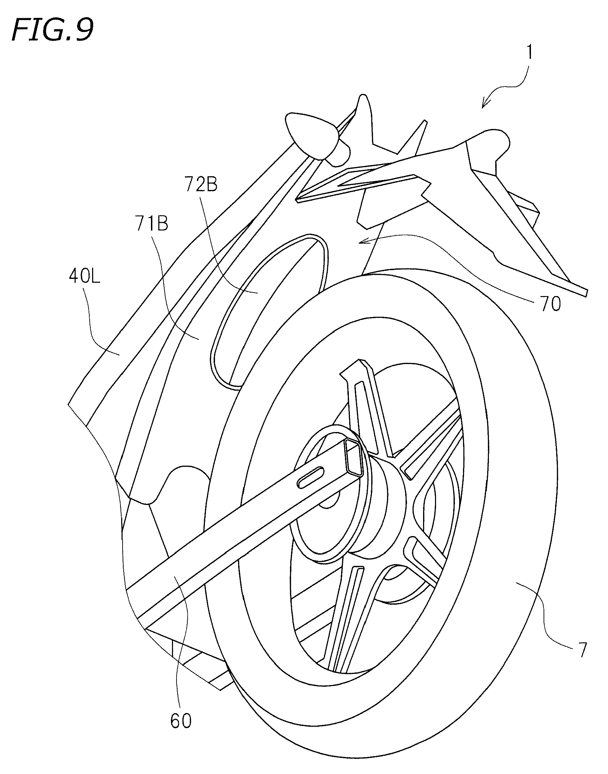

As illustrated in FIG. 6, the rear fender 70 preferably includes a first upper surface 71 U and a second upper surface 72U. As illustrated in FIG. 7, the second upper surface 72U is located between the right and left seat frames 40R and 40L. As illustrated in FIG. 8, the second upper surface 72U protrudes upward from the first upper surface 71 U. The second upper surface 72U is a curved surface. Note that the second upper surface 72U is not limited to a curved surface. As illustrated in FIG. 9, the rear fender 70 preferably further includes a first lower surface 71 B and a second lower surface 72B. As illustrated in FIG. 8, the first lower surface 71 B is located on a back of the first upper surface 71 U. The second lower surface 72B is located on a back of the second upper surface 72U. The second lower surface 72B is recessed upward from the first lower surface 71 B. As illustrated in FIG. 2, the second upper surface 72U and the second lower surface 72B of the rear fender 70 are disposed above the rear wheel 7. Thus, when the rear wheel 7 bounces upward, i.e., when a distance between the rear wheel 7 and the rear fender 70 is reduced, the second lower surface 72B of the rear fender 70 and the rear wheel 7 do not come into contact with each other. When the rear wheel 7 bounces upward and the distance between the rear wheel 7 and the second lower surface 72B is minimized, the rear wheel 7 and the first lower surface 71 B may overlap with each other in the side view of the vehicle.

As illustrated in FIG. 6, the second upper surface 72U of the rear fender 70 is provided with a plurality of ribs 73. Heights of the plurality of ribs 73 measured from the first upper surface 71 U are substantially equal to each other. The ribs 73 extend in a front-rear direction of the vehicle. Note that the direction in which the ribs 73 extend is not limited to any particular direction. Instead of providing the ribs 73, a flat surface on which the battery 80 is to be disposed may be provided on the second upper surface 72U.

The second upper surface 72U of the rear fender 70 is provided with a front wall 74F, a rear wall 74RE, a right wall 74R, and a left wall 74L. The front wall 74F, the rear wall 74RE, the right wall 74R and the left wall 74L restrict movement of the battery 80. The front wall 74F extends upward from the second upper surface 72U. The front wall 74F also extends in a width direction of the vehicle. The front wall 74F is provided in front of the ribs 73. The front wall 74F preferably includes a first retaining portion 75F by which a rubber band 18 (which will be described below) is to be retained. The rear wall 74RE extends upward from the second upper surface 72U. The rear wall 74RE also extends in the width direction of the vehicle. The rear wall 74RE is provided behind the ribs 73. The rear wall 74RE preferably includes a second retaining portion 75RE by which the rubber band 18 is to be retained. The left wall 74L extends upward from the second upper surface 72U. The left wall 74L also extends in the front-rear direction of the vehicle. The left wall 74L is provided leftward of the ribs 73. The right wall 74R extends upward from the second upper surface 72U. The right wall 74R also extends in the front-rear direction of the vehicle. The right wall 74R is provided rightward of the ribs 73.

As illustrated in FIG. 7, the battery 80 has a cuboid shape. It is to be noted that the battery 80 is not limited to a cuboid shape. The battery 80 may have a circular cylindrical shape, an elliptic cylindrical shape or an oval cylindrical shape, for example. As illustrated in FIG. 3, the battery 80 is disposed under the seat 10. More specifically, the battery 80 is disposed under the second seat portion 14 of the seat 10. As illustrated in FIG. 2, the battery 80 is disposed behind the fuel tank 64. As illustrated in FIG. 7, the battery 80 is disposed over the second upper surface 72U of the rear fender 70. More specifically, the battery 80 is disposed on the plurality of ribs 73 provided on the second upper surface 72U. Although the battery 80 is disposed on the ribs 73 in the present preferred embodiment, the battery 80 may be directly disposed on the second upper surface 72U. Alternatively, the battery 80 may be disposed on a given member provided on the second upper surface 72U or the ribs 73, so that the battery 80 is not in contact with the second upper surface 72U. As illustrated in FIG. 5, the battery 80 is disposed between the right and left seat frames 40R and 40L. The battery 80 is disposed between a right seat load receiving portion 43R and a left seat load receiving portion 43L (which will be described below). Note that FIG. 5 is a plan view illustrating components of the motorcycle 1 which are located in a rear portion of the motorcycle 1. In FIG. 5, the storage box 85 is detached from the rear portion of the motorcycle 1. As illustrated in FIG. 3, the battery 80 overlaps with the right and left seat frames 40R and 40L in the side view of the vehicle.

As illustrated in FIG. 7, the battery 80 is disposed so that a first surface 81A which is the largest surface of the battery 80 faces the second upper surface 72U of the rear fender 70. In other words, the battery 80 is disposed so that the first surface 81A faces the plurality of ribs 73 provided on the second upper surface 72U. As illustrated in FIG. 5, the battery 80 is disposed so that each second surface 81 B which is the smallest surface of the battery 80 faces in the width direction of the vehicle. The left second surface 81 B of the battery 80 faces the left wall 74L. The right second surface 81 B of the battery 80 faces the right wall 74R. The battery 80 is disposed so that each third surface 81 C which is smaller than the first surface 81A and larger than the second surface 81B faces in the front-rear direction of the vehicle. As illustrated in FIG. 7, the front third surface 81C of the battery 80 faces the front wall 74F. The rear third surface 81C of the battery 80 faces the rear wall 74RE (see FIG. 6).

When the battery 80 is disposed on or over the second upper surface 72U, a first side 82A which is the longest side of the battery 80 in the plan view extends in the width direction of the vehicle, i.e., in a right-left direction. As illustrated in FIG. 8, when the battery 80 is disposed on or over the second upper surface 72U, each second side 82B which is the shortest side of the battery 80 extends in an up-down direction. Each second side 82B may extend at an angle in the up-down direction. As illustrated in FIG. 8, an angle θ formed between a horizontal plane M and the second side 82B is greater than 45 degrees. A front end 80UF of an upper surface 80U of the battery 80 is located lower than a rear end 80UR of the upper surface 80U of the battery 80. In other words, the battery 80 is disposed at an angle. As illustrated in FIG. 7, the battery 80 is fixed to the second upper surface 72U of the rear fender 70 by the rubber band 18 extending in a direction that intersects the first side 82A. In the present preferred embodiment, the rubber band 18 extends in the front-rear direction of the vehicle. The rubber band 18 is retained by the first retaining portion 75F of the front wall 74F and the second retaining portion 75RE of the rear wall 74RE. The rubber band 18 urges the battery 80 toward the second upper surface 72U.

As illustrated in FIG. 4, the storage box 85 is disposed behind the fuel tank 64. The storage box 85 is attachable to and detachable from the motorcycle 1. The storage box 85 preferably includes: a storage portion 87 that stores an object; a first cover portion 88; and a second cover portion 89. As illustrated in FIG. 8, the storage portion 87 is provided behind the battery 80. The first and second cover portions 88 and 89 are integral with the storage portion 87. The first cover portion 88 is located forward relative to the storage portion 87. The first cover portion 88 is disposed over the battery 80. The first cover portion 88 covers the battery 80. The second cover portion 89 is located rearward relative to the storage portion 87. The second cover portion 89 is disposed on or over a bracket 44 (which will be described below). As illustrated in FIG. 4, the first cover portion 88 is provided with the first retaining portions 86A. The left first retaining portion 86A is disposed on the left seat load receiving portion 43L (see FIG. 7). The right first retaining portion 86A is disposed on the right seat load receiving portion 43R (see FIG. 7). The second cover portion 89 is provided with the second retaining portions 86B. The second retaining portions 86B are disposed on or over the bracket 44.

As illustrated in FIG. 7, the left seat frame 40L preferably includes the left seat load receiving portion 43L that receives a load from the seat 10. The left seat frame 40L indirectly supports the third foot 15C (see FIG. 3) of the seat 10 via the first retaining portion 86A (see FIG. 4) of the storage box 85. As illustrated in FIG. 5, the left seat load receiving portion 43L is disposed between the right and left seat frames 40R and 40L.

As illustrated in FIG. 7, the right seat frame 40R preferably includes the right seat load receiving portion 43R that receives a load from the seat 10. The right seat frame 40R indirectly supports the third foot 15C (see FIG. 3) of the seat 10 via the first retaining portion 86A (see FIG. 4) of the storage box 85. As illustrated in FIG. 5, the right seat load receiving portion 43R is disposed between the right and left seat frames 40R and 40L.

As illustrated in FIG. 5, the bracket 44 is disposed at a rear end 40LR of the left seat frame 40L and a rear end 40RR of the right seat frame 40R. The bracket 44 connects the right and left seat frames 40R and 40L to each other. The bracket 44 indirectly supports the fourth feet 15D (see FIG. 3) of the seat 10 via the second retaining portions 86B (see FIG. 4) of the storage box 85.

As illustrated in FIG. 5, a fuse box 35 is disposed behind the left seat load receiving portion 43L. The fuse box 35 is disposed leftward of the battery 80. The fuse box 35 is disposed between the left seat frame 40L and the battery 80. Alternatively, the fuse box 35 may be disposed behind the right seat load receiving portion 43R.

As illustrated in FIG. 5, an inclination sensor 36 which is electrical equipment is disposed behind the right seat load receiving portion 43R. The inclination sensor 36 is disposed rightward of the battery 80. The inclination sensor 36 is disposed between the right seat frame 40R and the battery 80. Alternatively, the inclination sensor 36 may be disposed behind the left seat load receiving portion 43L.

As illustrated in FIG. 7, a starter motor 37 is disposed under the right seat load receiving portion 43R. The starter motor 37 is disposed rightward of the battery 80. The starter motor 37 is disposed in front of the inclination sensor 36. The starter motor 37 is disposed between the right seat frame 40R and the battery 80. Alternatively, the starter motor 37 may be disposed under the left seat load receiving portion 43L.

As illustrated in FIG. 2, in the motorcycle 1, the second upper surface 72U of the rear fender 70 protrudes upward from the first upper surface 71 U as mentioned above. Therefore, rigidity of the rear fender 70 is higher than when the first upper surface 71 U and the second upper surface 72U are provided in the same plane. As a result, deflection of the second upper surface 72U is unlikely to occur even when oscillations are produced during vehicle traveling. The battery 80 is disposed on or over the second upper surface 72U of the rear fender 70, and therefore, stress applied to the battery 80 is smaller than when the battery 80 is disposed on or over the first upper surface 71 U. The second lower surface 72B of the rear fender 70 is recessed upward from the first lower surface 71 B. Hence, a sufficient space is provided between the rear wheel 7 and the rear fender 70. As a result, when the rear wheel 7 bounces upward, the rear wheel 7 and the rear fender 70 do not come into contact with each other. The battery 80 is disposed on or over the second upper surface 72U of the rear fender 70 at an angle so that the first surface 81A, which is the largest surface of the battery 80, faces the second upper surface 72U of the rear fender 70, the first side 82A, which is the longest side of the battery 80, extends in the width direction of the vehicle, and each second side 82B, which is the shortest side of the battery 80, extends in the up-down direction. Thus, a dimension of the battery 80 in the up-down direction is small. As a result, the seat 10 is prevented from being raised in position due to the placement of the battery 80. Since the first side 82A, which is the longest side of the battery 80, extends in the width direction of the vehicle, a space provided behind the battery 80 is larger than when the first side 82A extends in the front-rear direction of the vehicle. The battery 80 is disposed behind the fuel tank 64, thus making it possible to increase the air cleaner 68 in size in an upward direction and/or increase the fuel tank 64 in size in a forward direction.

As illustrated in FIG. 6, in the motorcycle 1 according to the present preferred embodiment, the second upper surface 72U of the rear fender 70 is provided with the plurality of ribs 73. Thus, rigidity of the second upper surface 72U of the rear fender 70 is further increased, and stress applied to the battery 80 is further reduced. Besides, the battery 80 is supported with more stability.

As illustrated in FIG. 2, in the motorcycle 1 according to the present preferred embodiment, the upper end 68T of the air cleaner 68 is located higher than the vertical center position 64C of the fuel tank 64. Thus, the use of the air cleaner 68 having a larger volume is enabled in the motorcycle 1 according to the present preferred embodiment.

As illustrated in FIG. 3, in the motorcycle 1 according to the present preferred embodiment, the battery 80 is disposed under the second seat portion 14 of the seat 10. The battery 80 is disposed on or over the second upper surface 72U of the rear fender 70 so that the dimension of the battery 80 in the up-down direction is small, and therefore, the second seat portion 14 is kept at a low position. As a result, comfort of a pillion passenger during riding is improved.

As illustrated in FIG. 5, in the motorcycle 1 according to the present preferred embodiment, the battery 80 is disposed between the right and left seat load receiving portions 43R and 43L. In this manner, a space provided between the right and left seat load receiving portions 43R and 43L is effectively utilized, thus compactly disposing the battery 80 on or over the second upper surface 72U of the rear fender 70.

As illustrated in FIG. 5, the motorcycle 1 according to the present preferred embodiment preferably includes the inclination sensor 36 disposed behind the right seat load receiving portion 43R and rightward of the battery 80. In this manner, a space provided behind the right seat load receiving portion 43R and rightward of the battery 80 is effectively utilized, thus compactly disposing the inclination sensor 36.

As illustrated in FIG. 5, the motorcycle 1 according to the present preferred embodiment preferably includes the storage box 85 that includes the storage portion 87 provided behind the battery 80. The battery 80 is disposed on or over the second upper surface 72U of the rear fender 70 so that the first side 82A, which is the longest side of the battery 80, extends in the width direction of the vehicle, thus providing, behind the battery 80, the storage portion 87 whose storage space is larger than when the first side 82A extends in the front-rear direction of the vehicle.

As illustrated in FIG. 4, in the motorcycle 1 according to the present preferred embodiment, the storage box 85 preferably includes the first cover portion 88 disposed over the battery 80. The first cover portion 88 protects the battery 80 from water and/or dust, for example, which might penetrate through an interstice of the seat 10.

As illustrated in FIG. 2, in the motorcycle 1 according to the present preferred embodiment, the battery 80 overlaps with the right and left seat frames 40R and 40L in the side view of the vehicle. Thus, the battery 80 is disposed at a low position. As a result, the seat 10 located above the battery 80 is prevented from being raised in position.

In the motorcycle 1 according to the present preferred embodiment, the left connection 57L between the left backstay 56L and the left seat frame 40L, and the right connection 57R between the right backstay 56R and the right seat frame 40R are located forward relative to the battery 80 in the side view of the vehicle. Thus, the space between the rear fender 70 and the rear wheel 7 is further increased. As a result, even when the rear wheel 7 is relatively large, interference between the rear fender 70 and the rear wheel 7 is prevented.

### Second Preferred Embodiment

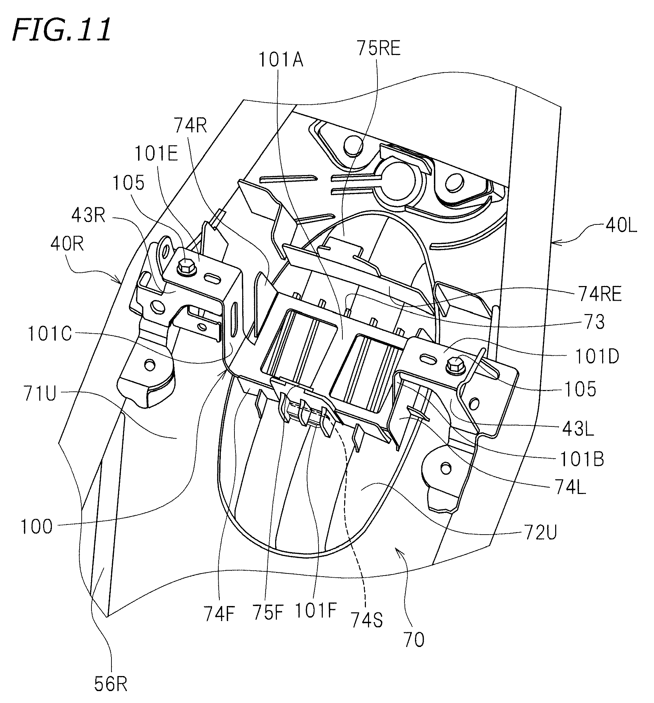

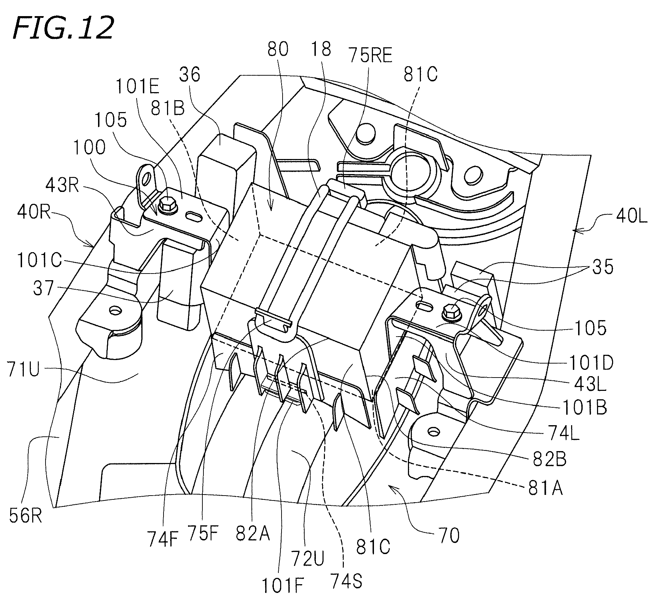

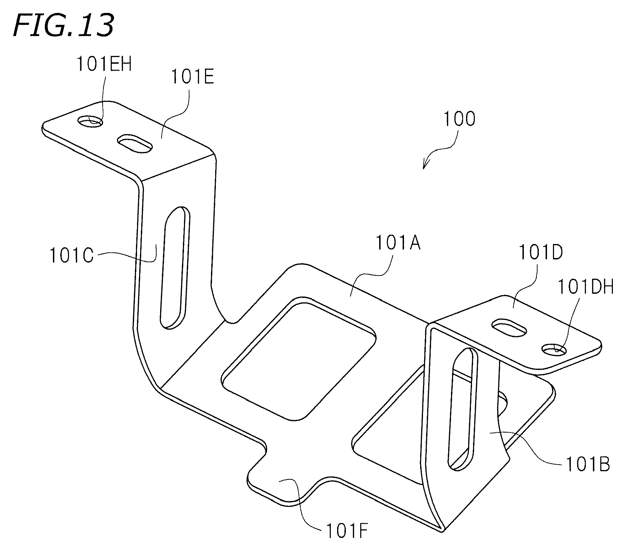

FIG. 11 is a perspective view illustrating the second upper surface 72U of the rear fender 70 according to a second preferred embodiment and its surrounding components. FIG. 12 is a perspective view illustrating the battery 80 according to the second preferred embodiment and its surrounding components. FIG. 13 is a perspective view illustrating a reinforcing member 100 according to the second preferred embodiment.

As illustrated in FIG. 11, the reinforcing member 100 is disposed over the second upper surface 72U of the rear fender 70. More specifically, the reinforcing member 100 is disposed on the ribs 73 provided on the second upper surface 72U. As illustrated in FIG. 12, the reinforcing member 100 is disposed between the second upper surface 72U and the battery 80.

As illustrated in FIG. 13, the reinforcing member 100 preferably includes a bottom wall 101A, a left wall 101B, a right wall 101C, a left support portion 101D, and a right support portion 101E. As illustrated in FIG. 11, the bottom wall 101A is disposed over the second upper surface 72U. More specifically, the bottom wall 101A is disposed on the ribs 73 provided on the second upper surface 72U. The bottom wall 101A is disposed between the right and left seat load receiving portions 43R and 43L. The bottom wall 101A is disposed between the second upper surface 72U and the battery 80. The bottom wall 101A is disposed between the front wall 74F and the rear wall 74RE. The front wall 74F restricts movement of the bottom wall 101A toward the front of the vehicle. As illustrated in FIG. 13, the left wall 101B extends upward from the bottom wall 101A. More specifically, the left wall 101 B extends upward from a left end of the bottom wall 101A. The right wall 101C extends upward from the bottom wall 101A. More specifically, the right wall 101C extends upward from a right end of the bottom wall 101A.

As illustrated in FIG. 13, the left support portion 101D extends leftward from the left wall 101B. More specifically, the left support portion 101D extends leftward from an upper end of the left wall 101 B. As illustrated in FIG. 11, the left support portion 101 D is supported by the left seat load receiving portion 43L. The left support portion 101 D is provided with a through hole 101 DH (see FIG. 13). A bolt 105 is inserted into the through hole 101 DH and a through hole 43LH (see FIG. 6) of the left seat load receiving portion 43L, thus fixing the left support portion 101 D and the left seat load receiving portion 43L to each other. Alternatively, the left support portion 101 D may be supported by the left seat frame 40L.

As illustrated in FIG. 13, the right support portion 101E extends rightward from the right wall 101C. More specifically, the right support portion 101 E extends rightward from an upper end of the right wall 101C. As illustrated in FIG. 11, the right support portion 101 E is supported by the right seat load receiving portion 43R. The right support portion 101E is provided with a through hole 101 EH (see FIG. 13). Another bolt 105 is inserted into the through hole 101 EH and a through hole 43RH (see FIG. 6) of the right seat load receiving portion 43R, thus fixing the right support portion 101E and the right seat load receiving portion 43R to each other. Alternatively, the right support portion 101 E may be supported by the right seat frame 40R.

As illustrated in FIG. 13, the bottom wall 101A preferably includes a protrusion 101F. The protrusion 101 F is insertable into a through hole 74S (see FIG. 11) provided in the front wall 74F. As illustrated in FIG. 11, the protrusion 101F is inserted into the through hole 74S.

As illustrated in FIG. 11, in the motorcycle 1 according to the present preferred embodiment, the bottom wall 101A of the reinforcing member 100 is disposed over the second upper surface 72U of the rear fender 70, and the left support portion 101 D and the right support portion 101 E of the reinforcing member 100 are supported by the left seat load receiving portion 43L and the right seat load receiving portion 43R, respectively. Hence, even when deflection of the second upper surface 72U of the rear fender 70 toward the bottom wall 101A of the reinforcing member 100 is caused to occur, the bottom wall 101A inhibits the deflection of the second upper surface 72U. The battery 80 is disposed on the bottom wall 101A, thus further reducing stress applied to the battery 80.

### REFERENCE SIGNS LIST

- 7: rear wheel
- 10: seat
- 40L: left seat frame
- 40R: right seat frame
- 64: fuel tank
- 68: air cleaner
- 70: rear fender
- 72U: second upper surface
- 72B: second lower surface
- 80: battery
- 85: storage box

## Claims

1. A straddle-type vehicle (1) comprising:
a head pipe (20);
a main frame (32) extending obliquely downward and rearward from the head pipe (20);
a left seat frame (40L) extending rearward from the main frame (32);
a right seat frame (40R) extending rearward from the main frame (32), the right seat frame (40R) being disposed rightward of the left seat frame (40L);
a seat (10) disposed above the right seat frame (40R) and the left seat frame (40L);
a body cover (28) disposed at least laterally of the right seat frame (40R) and the left seat frame (40L), the body cover (28) including an upper surface portion (28U) located behind the head pipe (20) and in front of the seat (10) and extending obliquely downward and
rearward to a position lower than the seat (10);
a fuel tank (64) disposed under the seat (10);
an air cleaner (68) disposed under the seat (10) and in front of the fuel tank (64), the air cleaner (68) including an upper end (68T) located higher than a lower end (64B) of the fuel tank (64);
a rear wheel (7) disposed below the right seat frame (40R) and the left seat frame (40L);
a rear fender (70) disposed under the right seat frame (40R) and the left seat frame (40L) and over a portion of the rear wheel (7), and
a battery (80), **characterized in that**
the rear fender (70) including a first upper surface (71 U), a second upper surface (72U) protruding upward from the first upper surface (71 U), a first lower surface (71 B) located on a back of the first upper surface (71 U), and a second lower surface (72B) recessed upward from the first lower surface (71 B) and located on a back of the second upper surface (72U); and
the battery (80) is disposed behind the fuel tank (64) and on or over the second upper surface (72U),
wherein a largest surface (81A) of the battery (80) faces the second upper surface (72U),
a longest side (82A) of the battery (80) in a plan view extends in a width direction of the vehicle, and a shortest side (82B) of the battery (80) extends in an up-down direction, and wherein a front end (80UF) of an upper surface (80U) of the battery (80) is located lower than a rear end (80UR) of the upper surface (80U) of the battery (80).

2. A straddle-type vehicle (1) according to claim 1, **characterized in that** the second upper surface (72U) is provided with a plurality of ribs (73), and
wherein the battery (80) is disposed on the plurality of ribs (73), and the largest surface (81A) of the battery (80) faces the ribs (73).

3. A straddle-type vehicle (1) according to claim 1 or 2, **characterized in that** the upper end (68T) of the air cleaner (68) is located higher than a vertical center position (64C) of the fuel tank (64).

4. A straddle-type vehicle (1) according to any one of claims 1 to 3, **characterized in that** the seat (10) includes: a first seat portion (12) on which a driver sits; and a second seat portion (14) on which a pillion passenger sits, the second seat portion (14) being located behind the first seat portion (12), and
wherein the battery (80) is disposed under the second seat portion (14).

5. A straddle-type vehicle (1) according to any one of claims 1 to 4, **characterized in that** the left seat frame (40L) includes a left seat load receiving portion (43L) that receives a load from the seat (10),
wherein the right seat frame (40R) includes a right seat load receiving portion (43R) that receives a load from the seat (10),
wherein the right seat load receiving portion (43R) and the left seat load receiving portion (43L) are each disposed between the right seat frame (40R) and the left seat frame (40L), and
wherein the battery (80) is disposed between the right seat load receiving portion (43R) and the left seat load receiving portion (43L).

6. A straddle-type vehicle (1) according to claim 5, **characterized by** a reinforcing member (100),
wherein the reinforcing member (100) includes: a bottom wall (101A) disposed on or over the second upper surface (72U); a left wall (101 B) extending upward from the bottom wall (101A); a right wall (101C) extending upward from the bottom wall (101A); a left support portion (101 D) extending leftward from the left wall (101 B) and supported by the left seat load receiving portion (43L); and a right support portion (101 E) extending rightward from the right wall (101 C) and supported by the right seat load receiving portion (43R), and wherein the battery (80) is disposed on the bottom wall (101A).

7. A straddle-type vehicle (1) according to claim 5 or 6, **characterized by** electrical equipment (36) disposed behind at least one of the right seat load receiving portion (43R) and the left seat load receiving portion (43L) and laterally of the battery (80).

8. A straddle-type vehicle (1) according to any one of claims 1 to 7, **characterized by a** storage box (85) disposed behind the fuel tank (64),
wherein the storage box (85) includes a storage portion (87) provided behind the battery (80).

9. A straddle-type vehicle (1) according to claim 8, **characterized in that** the storage box (85) includes a cover portion (88) disposed over the battery (80).

10. A straddle-type vehicle (1) according to any one of claims 1 to 9, **characterized in that** the battery (80) overlaps with the right seat frame (40R) and the left seat frame (40L) in a side view of the vehicle.

11. A straddle-type vehicle (1) according to any one of claims 1 to 10, **characterized by:**
a left down frame (50L) extending obliquely downward and rearward from the left seat frame (40L);
a right down frame (50R) extending obliquely downward and rearward from the right seat frame (40R), the right down frame (50R) being disposed rightward of the left down frame (50L);
a left backstay (56L) disposed rearward relative to the left down frame (50L), the left backstay (56L) connecting the left down frame (50L) and the left seat frame (40L) to each other; and
a right backstay (56R) disposed rearward relative to the right down frame (50R), the right backstay (56R) connecting the right down frame (50R) and the right seat frame (40R) to each other,
wherein a portion of the rear fender (70) is disposed under the right backstay (56R) and the left backstay (56L), and
wherein in a side view of the vehicle, at least a portion of a left connection (57L) between the left backstay (56L) and the left seat frame (40L) is located forward relative to the battery (80), and at least a portion of a right connection (57R) between the right backstay (56R) and the right seat frame (40R) is located forward relative to the battery (80).

12. A straddle-type vehicle (1) according to any one of claims 1 to 11, **characterized in that** the battery (80) is fixed to the second upper surface (72U) by a rubber band (18) extending in a direction that intersects the longest side (82A) of the battery (80).

13. A straddle-type vehicle (1) according to any one of claims 1 to 12, **characterized in that** means to support the rear wheel (7) are configured such that when the rear wheel (7) bounces upward, the second lower surface (72B) and the rear wheel (7) do not come into contact with each other.

## Patentansprüche

1. Spreiz-Sitz-Typ-Fahrzeug (1), das umfasst:
ein Kopfrohr (20);
einen Haupt-Rahmen (32), der sich schräg nach unten und nach hinten von dem Kopfrohr (20) erstreckt;
einen linken Sitz-Rahmen (40L), der sich nach hinten von dem Haupt-Rahmen (32) erstreckt;
einen rechten Sitz-Rahmen (40R), der sich nach hinten von dem Haupt-Rahmen (32) erstreckt, der rechte Sitz-Rahmen (40R) ist rechts von dem linken Sitz-Rahmen (40L) positioniert;
einen Sitz (10), der oberhalb des rechten Sitz-Rahmens (40R) und des linken Sitz-Rahmens (40L) positioniert ist;
eine Körper-Abdeckung (28), die zumindest quer zu dem rechten Sitz-Rahmen (40R) und dem linken Sitz-Rahmen (40L) positioniert ist, die Körper-Abdeckung (28) beinhaltet einen oberen Flächenabschnitt (28U), der hinter dem Kopfrohr (20) und vor dem Sitz (10) angeordnet ist und sich schräg nach unten und nach hinten zu einer Position niedriger als Sitz (10) erstreckt;
einen Kraftstofftank (64), der unter dem Sitz (10) positioniert ist;
einen Luftfilter (68), der unter dem Sitz (10) und vor dem Kraftstofftank (64) positioniert ist, der Luftfilter (68) beinhaltet ein oberes Ende (68T), das höher als ein unteres Ende (64B) des Kraftstofftanks (64) angeordnet ist;
ein Hinterrad (7), das unterhalb des rechten Sitz-Rahmens (40R) und des linken Sitz-Rahmens (40L) positioniert ist;
ein hinterer Kotflügel (70), der unter dem rechten Sitz-Rahmen (40R) und dem linken Sitz-Rahmen (40L) und über einem Abschnitt des Hinterrads (7) positioniert ist, und
eine Batterie (80), **dadurch gekennzeichnet, dass**
der hintere Kotflügel (70) eine erste obere Fläche (71 U), eine zweite obere Fläche (72U), die nach oben von der ersten oberen Fläche (71 U) vorsteht, eine erste untere Fläche (71 B), die rückwärtig von der ersten oberen Fläche (71 U) angeordnet ist, und
eine zweite untere Fläche (72B), die nach oben von der ersten unteren Fläche (71 B) ausgenommen ist, und rückwärtig an der zweiten oberen Fläche (72U) angeordnet ist, beinhaltet; und
die Batterie (80) hinter dem Kraftstofftank (64) und auf oder über der zweiten oberen Fläche (72U) positioniert ist,
wobei eine größte Fläche (81A) der Batterie (80) der zweiten oberen Fläche (72U) gegenüberliegt, eine längste Seite (82A) der Batterie (80) in einer Draufsicht sich in eine Breitenrichtung des Fahrzeugs erstreckt, und eine kürzeste Seite (82B) der Batterie (80) sich in eine Oben-Unten-Richtung erstreckt, und
wobei ein Vorderende (80UF) einer oberen Fläche (80U) der Batterie (80) niedriger angeordnet ist als ein hinteres Ende (80UR) der oberen Fläche (80U) der Batterie (80).

2. Ein Spreiz-Sitz-Typ-Fahrzeug (1) gemäß Anspruch 1, **dadurch gekennzeichnet, dass** die zweite obere Fläche (72U) mit einer Mehrzahl von Rippen (73) vorgesehen ist, und
wobei die Batterie (80) an der Mehrzahl von Rippen (73) positioniert ist und die größte Fläche (81A) der Batterie (80) den Rippen (73) gegenüberliegt.

3. Ein Spreiz-Sitz-Typ-Fahrzeug (1) gemäß Anspruch 1 oder 2, **dadurch gekennzeichnet, dass** das obere Ende (68T) des Luftfilters (68) höher angeordnet ist als ein vertikaler Mittenabschnitt (64C) des Kraftstofftanks (64).

4. Ein Spreiz-Sitz-Typ-Fahrzeug (1) gemäß irgendeinem der Ansprüche 1 bis 3,
**dadurch gekennzeichnet, dass** der Sitz (10) beinhaltet: einen ersten Sitzabschnitt (12), auf dem ein Fahrer sitzt; und einen zweiten Sitzabschnitt (14), auf dem Sozius-Passagier sitzt, der zweite Sitzabschnitt (14) ist hinter dem ersten Sitzabschnitt (12) angeordnet, und
wobei die Batterie (80) unter dem zweiten Sitzabschnitt (14) positioniert ist.

5. Ein Spreiz-Sitz-Typ-Fahrzeug (1) gemäß irgendeinem der Ansprüche 1 bis 4,
**dadurch gekennzeichnet, dass** der linke Sitz-Rahmen (40L) einen linken Sitz-Last-Aufnahmeabschnitt (43L) beinhaltet, der eine Last von dem Sitz (10) aufnimmt, wobei der rechte Sitz-Rahmen (40R) einen rechten Sitz-Last-Aufnahmeabschnitt (43R) beinhaltet, der eine Last von dem Sitz (10) aufnimmt,
wobei der rechte Sitz-Last-Aufnahmeabschnitt (43R) und der linke Sitz-Last-Aufnahmeabschnitt (43L) zwischen dem rechten Sitz-Rahmen (40R) und dem linken Sitz-Rahmen (40L) positioniert sind, und
wobei die Batterie (80) zwischen dem rechten Sitz-Last-Aufnahmeabschnitt (43R) und dem linken Sitz-Last-Aufnahmeabschnitt (43L) positioniert ist.

6. Ein Spreiz-Sitz-Typ-Fahrzeug (1) gemäß Anspruch 5, **gekennzeichnet durch** ein Verstärkungselement (100),
wobei das Verstärkungselement (100) beinhaltet: eine Boden-Wand (101A), die auf oder über der zweiten oberen Fläche (72U) positioniert ist; eine linke Wand (101 B), die sich nach oben von der Boden-Wand (101A) erstreckt; eine rechte Wand (101 C), die sich nach oben von der Boden-Wand (101A) erstreckt; einen linken Lagerabschnitt (101 D), der sich nach links von der linken Wand (101 B) erstreckt und **durch** den linken Sitz-Last-Aufnahmeabschnitt (43L) gelagert ist; und einen rechten Lagerabschnitt (101 E), der sich nach rechts von der rechten Wand (101 C) erstreckt und **durch** den rechten Sitz-Last-Aufnahmeabschnitt (43R) gelagert ist, und
wobei die Batterie (80) auf der Boden-Wand (101A) positioniert ist.

7. Ein Spreiz-Sitz-Typ-Fahrzeug (1) gemäß Anspruch 5 oder 6, **gekennzeichnet durch** eine elektrische Ausrüstung (36), die hinter zumindest einem von dem rechten Sitz-Last-Aufnahmeabschnitt (43R) und dem linken Sitz-Last-Aufnahmeabschnitt (43L) und quer zu der Batterie (80) positioniert ist.

8. Ein Spreiz-Sitz-Typ-Fahrzeug (1) gemäß irgendeinem der Ansprüche 1 bis 7, **gekennzeichnet durch** eine Lager-Box (85), die hinter dem Kraftstofftank (64) positioniert ist,
wobei die Lager-Box (85) einen Lagerabschnitt (87) beinhaltet, der hinter Batterie (80) vorgesehen ist.

9. Ein Spreiz-Sitz-Typ-Fahrzeug (1) gemäß Anspruch 8, **dadurch gekennzeichnet, dass** die Lager-Box (85) einen Abdeckabschnitt (88) beinhaltet, der über der Batterie (80) positioniert ist.

10. Ein Spreiz-Sitz-Typ-Fahrzeug (1) gemäß irgendeinem der Ansprüche 1 bis 9,
**dadurch gekennzeichnet, dass** die Batterie (80) mit dem rechten Sitz-Rahmen (40R) und dem linken Sitz-Rahmen (40L) in einer Seitenansicht des Fahrzeugs überlappt.

11. Ein Spreiz-Sitz-Typ-Fahrzeug (1) gemäß irgendeinem der Ansprüche 1 bis 10,
**gekennzeichnet durch:**
einen linken Unter-Rahmen (50L), der sich schräg nach unten und hinten von dem linken Sitz-Rahmen (40L) erstreckt;
einen rechten Unter-Rahmen (50R), der sich schräg nach unten und hinten von dem rechten Sitz-Rahmen (40R) erstreckt, der rechte Unter-Rahmen (50R) ist rechts von dem linken Unter-Rahmen (50L) positioniert;
eine linke Rück-Stange (56L), die rückwärtig relativ zu dem linken Unter-Rahmen (50L) positioniert ist, die linke Rück-Stange (56L) verbindet den linken Unter-Rahmen (50L) und den linken Sitz-Rahmen (40L) miteinander; und
eine rechte Rück-Stange (56R), die rückwärtig relativ zu dem rechten Unter-Rahmen (50R) positioniert ist, die rechte Rück-Stange (56R) verbindet den rechten Unter-Rahmen (50R) und den rechten Sitz-Rahmen (40R) miteinander,
wobei ein Abschnitt des hinteren Kotflügels (70) unter der rechten Rück-Stange (56R) und der linken Rück-Stange (56L) positioniert ist, und
wobei in einer Seitenansicht des Fahrzeugs zumindest ein Abschnitt einer linken Verbindung (57L) zwischen der linken Rück-Stange (56L) und dem linken Sitz-Rahmen (40L) relativ vor der Batterie (80) angeordnet ist, und zumindest ein Abschnitt einer rechten Verbindung (57R) zwischen der rechten Rück-Stange (56R) und dem rechten Sitz-Rahmen (40R) relativ vor der Batterie (80) angeordnet ist.

12. Ein Spreiz-Sitz-Typ-Fahrzeug (1) gemäß irgendeinem der Ansprüche 1 bis 11, **dadurch gekennzeichnet, dass** die Batterie (80) auf der zweiten oberen Fläche (72U) durch ein Gummiband (18) fixiert ist, das sich in eine Richtung erstreckt, welche die längste Seite (82A) der Batterie (80) schneidet.

13. Ein Spreiz-Sitz-Typ-Fahrzeug (1) gemäß irgendeinem der Ansprüche 1 bis 12, **dadurch gekennzeichnet, dass** Einrichtungen zum Lagern des Hinterrads (7) konfiguriert sind, so dass, wenn das Hinterrad (7) nach oben springt, die zweite untere Fläche (72B) und das Hinterrad (7) nicht in Kontakt miteinander kommen.

## Revendications

1. Véhicule de type à enfourcher (1) comprenant :
un tube frontal (20) ;
un cadre principal (32) s'étendant obliquement vers le bas et l'arrière depuis le tube frontal (20) ;
un cadre de siège gauche (40L) s'étendant vers l'arrière depuis le cadre principal (32) ;
un cadre de siège droit (40R) s'étendant vers l'arrière depuis le cadre principal (32), le cadre de siège droit (40R) étant disposé à droite du cadre de siège gauche (40L) ;
un siège (10) disposé au-dessus du cadre de siège droit (40R) et du cadre de siège gauche (40L) ;
un capot de corps (28) disposée au moins latéralement par rapport au cadre de siège droit (40R) et du cadre de siège gauche (40L), le capot de corps (28) incluant une partie de surface supérieure (28U) située derrière le tube frontal (20) et à l'avant du siège (10) et s'étendant obliquement vers le bas et l'arrière jusqu'à une position plus basse que le siège (10) ;
un réservoir de carburant (64) disposé sous le siège (10) ;
un filtre à air (68) disposé sous le siège (10) et à l'avant du réservoir de carburant (64), le filtre à air (68) incluant une extrémité supérieure (68T) située plus haut qu'une extrémité inférieure (64B) du réservoir de carburant (64) ;
une roue arrière (7) disposée sous le cadre de siège droit (40R) et le cadre de siège gauche (40L) ;
un garde-boue arrière (70) disposé sous le cadre de siège droit (40R) et le cadre de siège gauche (40L) et au-dessus d'une partie de la roue arrière (7), et
une batterie (80), **caractérisé en ce que**
le garde-boue arrière (70) inclut une première surface supérieure (71 U), une seconde surface supérieure (72U) faisant saillie vers le haut à partir de la première surface supérieure (71U), une première surface inférieure (71B) située sur l'arrière de la première surface supérieure (71 U) et une seconde surface inférieure (72B) en retrait vers le haut par rapport à la première surface inférieure (71B) et
située sur l'arrière de la seconde surface supérieure (72U) ; et
la batterie (80) est disposée derrière le réservoir de carburant (64) et sur ou au-dessus de la seconde surface supérieure (72U),
où la plus grande surface (81 A) de la batterie (80) fait face à la seconde surface supérieure (72U), le côté plus long (82A) de la batterie (80) dans une vue en plan s'étend dans une direction de la largeur du véhicule, et le côté le plus court (82B) de la batterie (80) s'étend dans une direction de haut en bas, et
où une extrémité avant (80UF) d'une surface supérieure (80U) de la batterie (80) se situe plus bas qu'une extrémité arrière (80UR) de la surface supérieure (80U) de la batterie (80).

2. Véhicule de type à enfourcher (1) selon la revendication 1, **caractérisé en ce que** la seconde surface supérieure (72U) est munie d'une pluralité de nervures (73), et où la batterie (80) est disposée sur la pluralité de nervures (73) et la plus grande surface (81A) de la batterie (80) fait face aux nervures (73).

3. Véhicule de type à enfourcher (1) selon la revendication 1 ou 2, **caractérisé en ce que** l'extrémité supérieure (68T) du filtre à air (68) est située plus haut qu'une position centrale verticale (64C) du réservoir de carburant (64).

4. Véhicule de type à enfourcher (1) selon l'une quelconque des revendications 1 à 3, **caractérisé en ce que**
le siège (10) inclut : une première partie de siège (12) sur laquelle s'assoit un conducteur ; et une seconde partie de siège (14) sur laquelle s'assoit un passager, la seconde partie de siège (14) étant située derrière la première partie de siège (12), et
où la batterie (80) est disposée sous la seconde partie de siège (14).

5. Véhicule de type à enfourcher (1) selon l'une quelconque des revendications 1 à 4, **caractérisé en ce que**
le cadre de siège gauche (40L) inclut une partie de réception de charge de siège gauche (43L) qui reçoit une charge du siège (10),
où le cadre de siège droit (40R) inclut une partie de réception de charge de siège droite (43R) qui reçoit une charge du siège (10),
où la partie de réception de charge de siège droite (43R) et la partie de réception de charge de siège gauche (43L) sont chacune disposées entre le cadre de siège droit (40R) et le cadre de siège gauche (40L),
et
où la batterie (80) est disposée entre la partie de réception de charge de siège droite (43R) et la partie de réception de charge de siège gauche (43L).

6. Véhicule de type à enfourcher (1) selon la revendication 5, **caractérisé par** un élément de renfort (100),
où l'élément de renfort (100) comprend : une paroi de fond (101A) disposée sur ou au-dessus de la seconde surface supérieure (72U) ; une paroi gauche (101B) s'étendant vers le haut depuis la paroi de fond (101A) ; une paroi droite (101C) s'étendant vers le haut depuis la paroi de fond (101A) ; une partie de support gauche (101D) s'étendant vers la gauche depuis la paroi gauche (101B) et supportée par la partie de réception de charge de siège gauche (43L) ; et une partie de support droite (101E) s'étendant vers la droite depuis la paroi droite (101C) et supportée par la partie de réception de charge de siège droite (43R), et
où la batterie (80) est disposé sur la paroi de fond (101A).

7. Véhicule de type à enfourcher (1) selon la revendication 5 ou 6, **caractérisé par** un équipement électrique (36) disposé derrière au moins une des parties que sont la partie de réception de charge de siège droite (43R) et la partie de réception de charge de siège gauche (43L) et latéralement par rapport à la batterie (80).

8. Véhicule de type à enfourcher (1) selon l'une quelconque des revendications 1 à 7, **caractérisé par** un coffre de rangement (85) disposé derrière le réservoir de carburant (64),
où le coffre de rangement (85) inclut une partie de stockage (87) disposée derrière la batterie (80).

9. Véhicule de type à enfourcher (1) selon la revendication 8, **caractérisé en ce que** le coffre de rangement (85) inclut une partie de capot (88) disposée au-dessus de la batterie (80).

10. Véhicule de type à enfourcher (1) selon l'une quelconque des revendications 1 à 9, **caractérisé en ce que** la batterie (80) se superpose au cadre de siège droit (40R) et au cadre de siège gauche (40L) dans une vue latérale du véhicule.

11. Véhicule de type à enfourcher (1) selon l'une quelconque des revendications 1 à 10, **caractérisé par :**
un cadre inférieur gauche (50L) s'étendant obliquement vers le bas et l'arrière depuis le cadre de siège gauche (40L) ;
un cadre inférieur droit (50R) s'étendant obliquement vers le bas et l'arrière depuis le cadre de siège droit (40R), le cadre inférieur droit (50R) étant disposé à droite du cadre inférieur gauche (50L) ;
un étai arrière gauche (56L) disposé vers l'arrière par rapport au cadre inférieur gauche (50L), l'étai arrière gauche (56L) reliant le cadre inférieur gauche (50L) et
le cadre de siège gauche (40L) ; et
un étai arrière droit (56R) disposé vers l'arrière par rapport au cadre inférieur droit (50R), l'étai arrière droit (56R) reliant le cadre inférieur droit (50R) et le cadre de siège droit (40R),
où une partie du garde-boue arrière (70) est disposée sous l'étai arrière droit (56R) et l'étai arrière gauche (56L), et
où dans une vue latérale du véhicule, au moins une partie d'une connexion gauche (57L) entre l'étai arrière gauche (56L) et le cadre de siège gauche (40L) est située vers l'avant par rapport à la batterie (80) et au moins une partie d'une connexion droite (57R) entre l'étai arrière droit (56R) et le cadre de siège droit (40R) est située vers l'avant par rapport à la batterie (80).

12. Véhicule de type à enfourcher (1) selon l'une quelconque des revendications 1 à 11, **caractérisé en ce que**
la batterie (80) est fixée à la seconde surface supérieure (72U) par une bande en caoutchouc (18) s'étendant dans une direction recoupant le côté le plus long (82A) de la batterie (80).

13. Véhicule de type à enfourcher (1) selon l'une quelconque des revendications 1 à 12, **caractérisé en ce que**
des moyens pour supporter la roue arrière (7) sont conçus de telle manière que lorsque la roue arrière (7) rebondit vers le haut, la seconde surface inférieure (72B) et la roue arrière (7) n'entrent pas en contact l'une avec l'autre.
